# FASCICULE DE BREVET EUROPEEN

(11) **EP 2 794 299 B1**
(45) Date de publication et mention de la délivrance du brevet: **19.09.2018**
(21) Numéro de dépôt: 12809771.4
(22) Date de dépôt: 18.12.2012
(51) Int. Cl.: B60C 11/03

(54) **SOMMET POUR PNEUMATIQUE D'AVION**
REIFEN FÜR FLUGZEUGREIFEN
TREAD FOR AIRCRAFT TIRE

(30) Priorité: 20.12.2011 FR 1162035
(43) Date de publication de la demande: 29.10.2014
(73) Titulaire: Compagnie Générale des Etablissements Michelin, 63000 Clermont-Ferrand (FR)
(72) Inventeur: CHAMBRIARD, François, F-63040 Clermont-Ferrand Cedex 9 (FR); ROCHE, Gilles, F-63040 Clermont-Ferrand Cedex 9 (FR)
(74) Mandataire: Millanvois, Patrick Jacques Jean
(86) Numéro de dépôt international: PCT/EP2012/075947
(87) Numéro de publication internationale: WO 2013/092585

(56) Documents cités:
- WO-A1-2012/105425
- FR-A- 1 067 885
- FR-A- 1 393 989
- GB-A- 2 114 069
- US-A- 2 540 045
- US-A- 2 759 512
- US-A- 3 494 401

## Description

La présente invention concerne un pneumatique pour avion, et, en particulier, le sommet d'un pneumatique pour avion.

Les constructeurs d'avions ont comme préoccupation constante la sécurité des passagers et, par conséquent, la diminution des risques de défaillance de leurs appareils. Parmi les modes de défaillance envisagés, la perte partielle ou totale de la bande roulement d'un pneumatique, équipant le train d'atterrissage d'un avion, est un mode de défaillance critique, au cours des phases de décollage ou d'atterrissage d'un avion.

Ce mode de défaillance se produit, en particulier, lorsque le pneumatique roule sur un objet contondant présent de façon aléatoire sur la piste. Compte tenu des conditions d'usage sévères d'un pneumatique d'avion, caractérisées par une pression de gonflage, une charge statique et une vitesse élevées, le passage de la bande de roulement du pneumatique sur l'objet contondant entraîne un endommagement de la bande de roulement qui aboutit généralement au découpage de la bande de roulement puis à la projection de morceaux de bande de roulement de dimensions géométriques et de masses plus ou moins élevées.

Les morceaux de bande de roulement peuvent alors soit percuter les structures de l'avion et entraîner des dommages structurels importants, du fait de l'énergie mécanique emmagasinée par lesdits morceaux, cette énergie mécanique étant d'autant plus importante que la masse et la vitesse de projection du morceau sont élevées, soit pénétrer dans les moteurs de l'avion et entraîner des problèmes de fonctionnement desdits moteurs, si ceux-ci ne peuvent pas absorber les morceaux de bande roulement en raison de leurs dimensions trop importantes.

Il a été envisagé de renforcer les structures de l'avion pour résister aux impacts potentiels et, en particulier, ceux des morceaux de bande de roulement. Mais, à iso-matériaux, cette solution implique une augmentation de la masse de la structure, pénalisante pour la performance de l'avion, d'où l'utilisation de matériaux structurels de plus en plus légers. Le renforcement mécanique de la structure ne règle toutefois pas le problème de projections dans les moteurs.

Des dispositifs de protection vis-à-vis de la projection de morceaux de bande de roulement ont été également envisagés. Le document WO 2010012913 décrit un panneau de protection, dont la surface externe comporte un matériau composite, monté, par l'intermédiaire de pièces déformables, sur un support lié à la structure de l'avion. Les pièces déformables, fixées sur plusieurs pièces de rigidification du support et perpendiculaires à la surface externe du panneau de protection, sont adaptées à flamber sous l'effet des impacts des morceaux de bande de roulement projetés. Le document WO 2010052447 décrit un dispositif protégeant les moteurs d'un avion de la projection de débris de bande de roulement de pneumatique. Ce dispositif comprend une barre de protection connectée de manière pivotante au train d'atterrissage principal de l'avion, la barre de protection étant mobile entre une première et une seconde positions. Dans la première position, la barre de protection s'étend latéralement en travers de l'ensemble monté, constitué du pneumatique et d'une roue, pour intercepter les trajectoires possibles des débris de bande de roulement.

Une autre famille de solutions décrit des dispositifs de fractionnement de la bande roulement, en vue de minimiser la taille des morceaux de bande de roulement et donc de minimiser les impacts sur l'avion. Le document US 7669798 décrit des moyens de fractionnement, situés entre la roue et une autre partie de l'avion, aptes à fragmenter en plusieurs morceaux la partie de la bande de roulement qui se détache du pneumatique et est projetée vers l'autre partie de l'avion. Ces moyens de fractionnement, tels qu'une grille avec des lames aptes à sectionner le matériau de la bande de roulement, sont agencés pour disperser lesdits morceaux.

Le document FR 1 067 885 A montre un pneumatique pour avion selon le préambule de la revendication 1.

Les dispositifs de protection ou de fractionnement précédemment décrits présentent l'inconvénient de constituer des structures additionnelles, dont les masses supplémentaires sont pénalisantes vis-à-vis de la charge utile de l'avion.

Les inventeurs se sont donnés pour objectif de diminuer les dimensions et donc la masse des morceaux de bande de roulement, en cas de déchapage accidentel du pneumatique, sans l'utilisation de dispositifs additionnels extérieurs au pneumatique, donc sans pénalisation de la charge utile de l'avion.

Cet objectif a été atteint, selon l'invention, par un pneumatique pour avion comprenant :
- une bande de roulement destinée à venir en contact avec un sol par l'intermédiaire d'une surface de roulement, et s'étendant radialement entre une surface de fond et la surface de roulement,
- la bande de roulement comprenant des cavités indépendantes, non reliées les unes aux autres,
- chaque cavité ayant, dans la surface de roulement, une surface débouchante inscrite dans un cercle,
- les surfaces débouchantes des cavités ayant une forme oblongue,
- les centres des cercles, circonscrits aux surfaces débouchantes des cavités, étant répartis axialement, sur au moins une partie de la largeur axiale de la surface de roulement, selon un pas axial au moins égal à 0.02 fois et au plus égal à 0.12 fois la longueur circonférentielle de la périphérie du pneumatique,
- les centres des cercles, circonscrits aux surfaces débouchantes des cavités, sont répartis circonférentiellement, sur au moins une partie de la périphérie du pneumatique, selon un pas circonférentiel au moins égal à 0.02 fois et au plus égal à 0.12 fois la longueur circonférentielle de la périphérie du pneumatique.
- les cavités, réparties axialement et circonférentiellement respectivement selon les pas axial et circonférentiel, constituant un réseau bidimensionnel de cavités constitué de mailles rectangulaires ou carrées,
- et, chaque cavité ayant un plan moyen orienté perpendiculairement à la surface débouchante et selon la plus grande dimension de la surface débouchante, les plans moyens des cavités étant répartis entre une première famille de plans moyens, parallèles entre eux et formant un angle avec la direction circonférentielle, et une deuxième famille de plans moyens, parallèles entre eux et perpendiculaires aux plans moyens de la première famille.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. On appelle plan équatorial le plan perpendiculaire à l'axe de rotation du pneumatique et passant par le milieu de la surface de roulement du pneumatique.

Dans ce qui suit, les expressions « radialement », « axialement » et « circonférentiellement » signifient respectivement « selon la direction radiale », « selon la direction axiale » et « selon la direction circonférentielle ».

De façon générale, un pneumatique comprend un sommet comprenant une bande roulement destinée à venir en contact avec le sol par l'intermédiaire d'une surface de roulement, ledit sommet étant relié par deux flancs à deux bourrelets destinés à venir en contact avec une jante.

La bande de roulement est un volume torique compris radialement entre une surface de fond radialement intérieure et une surface de roulement radialement extérieure : c'est la portion usante du pneumatique.

La surface de fond est une surface théorique délimitant la hauteur d'usure maximale autorisée : lorsque le niveau d'usure atteint cette surface de fond, le pneumatique est retiré.

La surface de roulement est destinée à entrer en contact avec le sol. Par convention, on définit la largeur axiale de la surface de roulement comme la distance axiale entre les limites axiales de contact de la surface de roulement, lorsque le pneumatique à l'état neuf est soumis à une flèche radiale égale à 32%, sous l'action combinée de la charge verticale et de la pression de gonflage. Par définition, la flèche radiale d'un pneumatique est sa déformation radiale, ou variation relative de hauteur radiale, lorsque celui-ci passe d'un état gonflé non chargé à un état gonflé chargé en statique. Elle est définie par le rapport de la variation de la hauteur radiale du pneumatique sur la moitié de la différence entre le diamètre extérieur du pneumatique et le diamètre maximum de la jante mesuré sur le crochet de jante. Le diamètre extérieur du pneumatique est mesuré en statique dans un état non chargé gonflé à la pression nominale telle que recommandée, par exemple, par la Tire and Rim Association ou TRA.

La bande de roulement généralement n'est pas pleine et comprend des cavités, pour répondre en particulier aux exigences d'adhérence du pneumatique au sol. Le plus souvent, la bande de roulement est constituée d'éléments en relief s'étendant radialement vers l'extérieur à partir de la surface de fond, lesdits éléments en relief étant séparés des creux. Dans le cas d'un pneumatique d'avion, les éléments en relief sont le plus souvent des nervures circonférentielles séparées par des creux circonférentiels, appelés sillons circonférentiels. Dans l'état de la technique, tel que présenté par le document FR 1067885, la bande de roulement comprend non pas des nervures circonférentielles mais des cavités indépendantes, c'est-à-dire non reliées les unes aux autres. Une cavité est un trou formé dans la bande de roulement et débouchant sur la surface de roulement, selon une surface débouchante. Chaque cavité a, dans la surface de roulement, une surface débouchante inscrite dans un cercle et plus précisément une surface débouchante circulaire. Le document WO 2012105425 décrit également une bande de roulement comprenant des cavités indépendantes, c'est-à-dire non reliées les unes aux autres. Enfin, le document US 3494401 décrit une bande de roulement combinant des nervures circonférentielles et des cavités positionnées dans lesdites nervures circonférentielles et débouchant dans les sillons circonférentiels séparant les nervures entre elles.

Radialement à l'intérieur de la bande de roulement, est positionnée l'armature de sommet qui est la structure de renforcement du sommet du pneumatique. L'armature de sommet d'un pneumatique pour avion comprend généralement au moins une couche d'armature de sommet, dite couche de sommet. Chaque couche de sommet est constituée d'éléments de renforcement enrobés dans un matériau élastomérique, c'est-à-dire à base de caoutchouc naturel ou synthétique, lesdits éléments de renforcement parallèles entre eux formant, avec la direction circonférentielle, un angle compris entre +20° et -20°. Dans un pneumatique d'avion, les éléments de renforcement d'une couche de sommet sont généralement disposés circonférentiellement selon une courbe ondulée.

Parmi les couches de sommet, on distingue les couches de travail constituant l'armature de travail, comprenant le plus souvent des éléments de renforcement textiles, et les couches de protection constituant l'armature de protection, comprenant le plus souvent des éléments de renforcement métalliques ou textiles, et disposées radialement à l'extérieur de l'armature de travail. Les couches de travail conditionnent le comportement mécanique du sommet. Les éléments de renforcement des couches de travail sont le plus souvent des câbles constitués de filés de filaments textiles, préférentiellement en polyamides aliphatiques ou en polyamides aromatiques. Les couches de protection protègent essentiellement les couches de travail des agressions susceptibles de se propager à travers la bande de roulement radialement vers l'intérieur du pneumatique. Les éléments de renforcement des couches de protection peuvent être soit des câbles constitués de fils métalliques, soit des câbles constitués de filés de filaments textiles.

Selon l'invention, les surfaces débouchantes des cavités ont une forme oblongue. Chaque surface débouchante oblongue peut être inscrite dans un cercle dont le diamètre correspond à la dimension maximale de la surface débouchante oblongue. Chaque cavité est un trou s'étendant radialement vers l'intérieur sur une hauteur radiale significative, au moins égale à la moitié de la distance radiale entre la surface de roulement et la surface de fond.

Egalement selon l'invention, les centres des cercles, circonscrits aux surfaces débouchantes des cavités, sont répartis axialement, sur au moins une partie de la largeur axiale de la surface de roulement, selon un pas axial au moins égal à 0.02 fois et au plus égal à 0.12 fois la longueur circonférentielle de la périphérie du pneumatique.

La largeur axiale de la surface de roulement est définie, par convention, comme étant la largeur axiale de l'aire de contact au sol de la surface de roulement pour un pneumatique neuf soumis à une combinaison de charge verticale et de pression de gonflage, entrainant une flèche radiale de 32%. Par définition, la flèche radiale d'un pneumatique est sa déformation radiale, ou variation relative de hauteur radiale, lorsque celui-ci passe d'un état gonflé non chargé à un état gonflé chargé en statique. Elle est définie par le rapport de la variation de la hauteur radiale du pneumatique sur la moitié de la différence entre le diamètre extérieur du pneumatique et le diamètre maximum de la jante mesuré sur le crochet de jante. Le diamètre extérieur du pneumatique est mesuré en statique dans un état non chargé gonflé à la pression nominale.

Le pas axial est la distance axiale entre les centres des cercles circonscrits aux surfaces débouchantes de deux cavités consécutives. Le pas axial peut être constant ou variable.

La longueur circonférentielle de la périphérie du pneumatique est la longueur développée de la surface de roulement. En pratique, elle peut être mesurée sur le pneumatique à l'état neuf, non monté sur jante et non gonflé, à l'aide, par exemple d'un ruban.

Encore selon l'invention, les centres des cercles, circonscrits aux surfaces débouchantes des cavités, sont répartis circonférentiellement, sur au moins une partie de la périphérie du pneumatique, selon un pas circonférentiel au moins égal à 0.02 fois et au plus égal à 0.12 fois la longueur circonférentielle de la périphérie du pneumatique.

Le pas circonférentiel est la distance circonférentielle entre les centres des cercles circonscrits aux surfaces débouchantes de deux cavités consécutives. Le pas circonférentiel peut être constant ou variable.

Lorsqu'un pneumatique d'avion, en phase de décollage ou d'atterrissage roule sur un objet contondant, celui-ci peut couper la bande de roulement et initier une fissure sur une certaine épaisseur radiale. Lors du passage de cette fissure dans l'aire de contact avec le sol de la surface de roulement, sous l'action des sollicitations mécaniques cycliques à chaque tour de roue, cette fissure se propage radialement vers l'intérieur du pneumatique jusqu'à la couche de sommet la plus radialement extérieure, puis axialement et circonférentiellement le long de la face radialement extérieure de la couche de sommet la plus radialement extérieure, entraînant le découpage du sommet du pneumatique au niveau de la couche de sommet la plus radialement extérieure. Sous l'effet des sollicitations mécaniques et en particulier des efforts centrifuges, la fissuration va se propager radialement vers l'extérieur du pneumatique à travers la bande de roulement, à divers azimuts du pneumatique. Il en résulte que la portion de bande de roulement ainsi découpée sous forme de morceaux de dimensions plus ou moins importantes, voire la bande de roulement quasiment complète, va se détacher du pneumatique et être projetée vers l'extérieur avec le risque de heurter la structure de l'avion ou de pénétrer dans les moteurs.

Dans le cas d'une bande de roulement classique, c'est-à-dire comprenant des nervures circonférentielles séparées par des sillons circonférentiels, les morceaux de bande de roulement peuvent s'étendre axialement sur une portion axiale ou sur toute la largeur axiale de la bande de roulement. Circonférentiellement, les morceaux de bande de roulement peuvent s'étendre sur une grande partie de la périphérie du pneumatique, voire sur toute sa périphérie. Par conséquent, les morceaux de bande de roulement projetés ont des dimensions et des masses pénalisantes susceptibles d'endommager les structures ou les moteurs de l'avion.

Dans le cas d'une bande de roulement selon l'invention, c'est-à-dire comprenant des cavités réparties axialement et circonférentiellement, les morceaux de bande de roulement ont des dimensions axiales et circonférentielles plus faibles que dans le cas d'une bande de roulement classique.

En effet, les cavités constituent des zones d'initiation de la découpe de la bande de roulement, dans la mesure où elles correspondent à une diminution locale de l'épaisseur radiale de la bande de roulement. Cette diminution d'épaisseur entraine un effet de charnière lors du passage des cavités en entrée et en sortie de l'aire de contact avec le sol de la surface de roulement. Elle favorise ainsi l'émergence de fissures se propageant radialement vers l'extérieur à partir de la face radialement extérieure de la couche de sommet la plus radialement extérieure. Les sollicitations mécaniques d'ouverture et de fermeture alternées des cavités, lors du passage dans l'aire de contact à chaque tour de roue, favorisent la propagation de la fissuration qui, émerge par ailleurs plus rapidement compte tenu de la diminution locale de l'épaisseur radiale de la bande de roulement. En d'autres termes, les cavités constituent des zones d'affaiblissement local favorisant l'émergence des fissures et l'initiation de la découpe de la bande de roulement.

Les cavités, réparties axialement et circonférentiellement respectivement selon des pas axial et circonférentiel définis, constituent un réseau bidimensionnel de cavités définissant des plans de fissuration préférentielle de la bande roulement. En effet, les cavités constituent les sommets des mailles de ce réseau bidimensionnel. Les fissures émergeant au niveau des cavités vont se propager d'une cavité à l'autre en entrainant la découpe de la bande de roulement selon les mailles de ce réseau. Les inventeurs ont pu observer que les dimensions axiales et circonférentielles maximales des morceaux de bande de roulement, issus de la découpe de la bande de roulement, étaient limitées par les dimensions des mailles du réseau.

Les inventeurs ont ainsi cherché à optimiser la répartition axiale des cavités selon la largeur axiale de la surface de roulement et la répartition circonférentielle des cavités le long de la périphérie du pneumatique, pour obtenir des morceaux de bande de roulement dont les dimensions maximales satisfont le cahier des charges des constructeurs d'avions. Cette optimisation a conduit les inventeurs à choisir un pas axial et un pas circonférentiel compris entre 0.02 fois et au plus égal à 0.12 fois la longueur circonférentielle de la périphérie du pneumatique. En particulier, un pas circonférentiel maximal, égal à 0.12 fois la longueur circonférentielle de la périphérie du pneumatique, garantit la présence d'au moins une cavité selon la direction circonférentielle dans l'aire de contact avec le sol de la surface de roulement. L'aire de contact de référence est celle d'un pneumatique neuf soumis à une combinaison de charge verticale et de pression de gonflage, entrainant une flèche radiale de 32%.

Egalement selon l'invention, les plans moyens des cavités sont répartis entre une première famille de plans moyens, parallèles entre eux et formant un angle avec la direction circonférentielle, et une deuxième famille de plans moyens, parallèles entre eux et perpendiculaires aux plans moyens de la première famille. Le plan moyen d'une cavité, défini dans le cadre de l'invention, est orienté perpendiculairement à la surface débouchante et selon la plus grande dimension de la surface débouchante. Le réseau bidimensionnel de cavités ainsi obtenu est alors constitué de mailles rectangulaires ou carrées bien adaptées à une découpe régulière de la bande de roulement.

Le pas axial des centres des cercles, circonscrits aux surfaces débouchantes des cavités, est avantageusement au moins égal à 0.06 fois la longueur circonférentielle de la périphérie du pneumatique, afin de maximiser le volume de bande de roulement à user et afin de ne pas trop limiter la largeur axiale maximale des morceaux de bande de roulement susceptibles de se détacher.

Le pas circonférentiel des centres des cercles, circonscrits aux surfaces débouchantes des cavités, est encore avantageusement au moins égal à 0.06 fois la longueur circonférentielle de la périphérie du pneumatique, afin de maximiser le volume de bande de roulement à user et afin de ne pas trop limiter la longueur circonférentielle maximale des morceaux de bande de roulement susceptibles de se détacher. Ce pas permet d'avoir également au moins deux cavités par alignement, selon la direction circonférentielle, dans l'aire de contact au sol de la surface de roulement.

Il est également avantageux que les centres des cercles, circonscrits aux surfaces débouchantes des cavités, soient répartis axialement, sur toute la largeur axiale de la surface de roulement, selon un pas axial constant, afin d'assurer la présence uniforme de zones d'affaiblissement de la bande de roulement et par conséquent l'émergence uniforme des fissures, selon la direction axiale.

De façon analogue, il est avantageux que les centres des cercles, circonscrits aux surfaces débouchantes des cavités, soient répartis circonférentiellement, sur toute la périphérie du pneumatique, selon un pas circonférentiel constant, afin d'assurer la présence uniforme de zones d'affaiblissement de la bande de roulement et par conséquent l'émergence uniforme des fissures, selon la direction circonférentielle.

Selon un mode de réalisation préféré, le pas axial et le pas circonférentiel des centres des cercles, circonscrits aux surfaces débouchantes des cavités, sont égaux. Cette caractéristique assure un maillage régulier de la bande de roulement, favorable à des dimensions plus homogènes des morceaux de bande de roulement.

Le rayon d'un cercle, circonscrit à la surface débouchante d'une cavité, est avantageusement au moins égal à 1.5 mm. C'est la taille minimale de la surface de débouchante donc de la cavité, permettant d'initier la découpe de la bande de roulement.

Le rayon d'un cercle, circonscrit à la surface débouchante d'une cavité, est au plus égal à 0.25 fois le pas axial et au plus égal à 0.25 fois le pas circonférentiel, pour garantir une quantité de matière suffisante entre deux cavités et éviter de fragiliser la bande de roulement en fonctionnement normal, sans endommagement par un objet contondant. Il est en effet important d'assurer l'intégrité de la bande de roulement en fonctionnement normal.

Selon une première variante de réalisation de l'invention, l'angle de la première famille de plans moyens est égal à 0°. Dans ces conditions, l'angle de la deuxième famille de plans moyens est égal à 90°, par rapport à la direction circonférentielle, ce qui est particulièrement favorable à des cycles d'ouverture et de fermeture des cavités dont les plans moyens appartiennent à cette deuxième famille, lors de l'entrée et de de la sortie des cavités dans l'aire de contact.

Selon une deuxième variante de réalisation de l'invention, l'angle de la première famille de plans moyens est égal à 45°. Dans ces conditions, l'angle de la deuxième famille de plans moyens est aussi égal à 45°. Par conséquent, cet angle de 45° va favoriser les cycles d'ouverture et de fermeture des cavités des deux familles, en entrée et en sortie des cavités dans l'aire de contact.

Il est enfin avantageux que la hauteur radiale d'une cavité soit au moins égale à la moitié de la hauteur radiale de la bande de roulement et au plus égale la hauteur radiale de bande de roulement. La hauteur radiale minimale est justifiée par le fait que la cavité doit avoir une efficacité suffisante. La hauteur radiale maximale est justifiée par le fait que la cavité ne doit pas descendre en-dessous du niveau maximal d'usure autorisé. L'optimisation de la hauteur radiale de la cavité dépend également du volume de bande de roulement nécessaire vis-à-vis de la performance en usure du pneumatique visée. Les cavités n'ont pas nécessairement toutes la même hauteur radiale pour, le cas échéant, constituer un indicateur d'usure à différents niveaux de la bande de roulement.

Les caractéristiques et autres avantages de l'invention seront mieux compris à l'aide des figures 1 à 5 :
- figure 1 : coupe méridienne du sommet d'un pneumatique pour avion selon l'invention,
- figure 2 : vue en coupe d'une cavité selon le plan moyen de la cavité,
- figure 3 : vue de dessus d'une bande de roulement d'un pneumatique d'avion selon l'invention,
- figure 4 : vue de dessus d'une bande de roulement d'un pneumatique d'avion selon une première variante de réalisation de l'invention,
- figure 5 : vue de dessus d'une bande de roulement d'un pneumatique d'avion selon une deuxième variante de réalisation de l'invention,

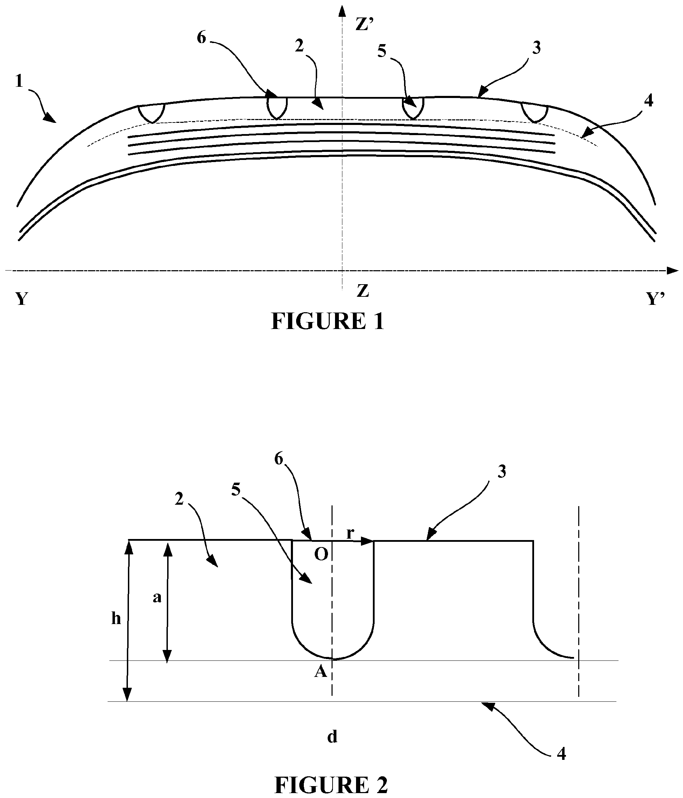

Les figures 1 à 5 ne sont pas représentées à l'échelle et sont représentées de façon simplifiée, afin de faciliter la compréhension de l'invention.

La figure 1 présente une coupe méridienne du sommet du pneumatique 1, c'est-à-dire une coupe dans un plan méridien (YY', ZZ'), où les directions YY' et ZZ' sont les directions respectivement axiale et radiale.

La figure 1 présente un pneumatique 1 pour avion comprenant une bande de roulement 2 destinée à venir en contact avec un sol par l'intermédiaire d'une surface de roulement 3 et radialement comprise entre une surface de fond 4 et la surface de roulement 3. La bande de roulement 2 comprend des cavités 5 ayant, dans la surface de roulement 3, des surfaces débouchantes 6. Radialement à l'intérieur de la bande roulement, est positionnée une armature de sommet, constituée d'une superposition de couches de sommet.

La figure 2 présente une vue en coupe d'une cavité 5 selon le plan moyen de la cavité, orienté perpendiculairement à la surface débouchante 6 de la cavité 5 et selon la plus grande dimension de la surface débouchante 6. Une cavité 5, formée dans la bande de roulement 2, est radialement comprise entre la surface de fond 4 et la surface de roulement 3. La surface débouchante 6 est inscrite dans un cercle 7 de centre 0 et de rayon r, non représenté car perpendiculaire au plan de la figure. La hauteur radiale a de la cavité 5, mesurée selon la droite, passant par le point A le plus radialement intérieur de la cavité 5 et perpendiculaire à la surface de roulement 3, est au moins égale à la moitié de la hauteur radiale h de la bande de roulement 2, entre la surface de fond 4 et la surface de roulement 3, et au plus égale à la hauteur radiale h.

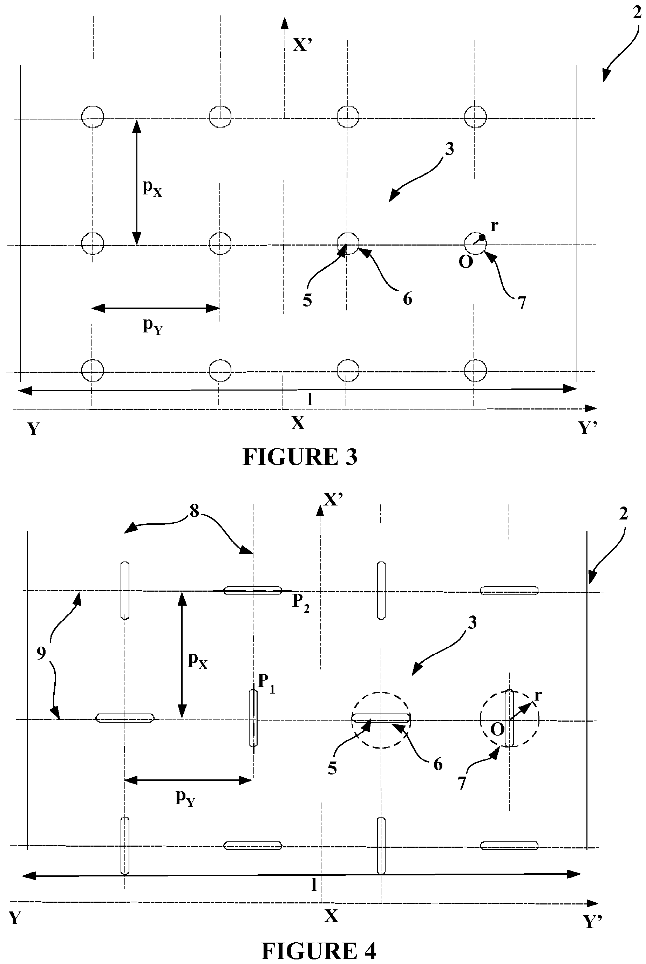

La figure 3 présente la vue de dessus d'une bande de roulement d'un pneumatique d'avion selon l'invention. La bande de roulement 2 comprend des cavités 5 débouchant sur la surface de roulement selon une surface débouchante 6 inscrite dans un cercle 7 de centre O et de rayon r. Sur la figure 3 sont représentés uniquement les cercles 7 circonscrits aux surfaces débouchantes 6, mais pas les surfaces débouchantes 6 elles-mêmes. Une surface débouchante 6 peut être inscrite dans un cercle 7 dont le diamètre correspond à la dimension maximale de la surface débouchante 6. Les centres O des cercles 7, circonscrits aux surfaces débouchantes 6 des cavités 5, sont répartis axialement, sur toute la largeur axiale 1 de la surface de roulement 3, selon un pas axial py constant garantissant la présence de quatre cavités selon la direction axiale YY'. Les centres O des cercles 7, circonscrits aux surfaces débouchantes 6 des cavités 5, sont répartis circonférentiellement, sur toute la périphérie du pneumatique, selon un pas circonférentiel p_{X} constant et égal au pas axial p_{Y}. Le pas circonférentiel p_{X} garantit la présence, dans l'aire de contact, de trois cavités selon la direction circonférentielle XX'.

La figure 4 présente la vue de dessus d'une bande de roulement d'un pneumatique d'avion selon une première variante de réalisation de l'invention. Cette première variante de réalisation de l'invention se caractérise par la forme oblongue de la surface débouchante 6 des cavités 5. Cette surface débouchante 6 oblongue est inscrite dans un cercle de centre O et de rayon r. Le plan moyen (P₁, P₂) de chaque cavité 5 est orienté perpendiculairement à la surface débouchante 6 oblongue et selon la plus grande dimension de la surface débouchante 6, c'est-à-dire selon son grand axe. Les plans moyens (P₁, P₂) des cavités 5 sont répartis entre une première famille 8 de plans moyens P₁, parallèles entre eux et formant un angle nul avec la direction circonférentielle XX', et une deuxième famille 9 de plans moyens P₂, parallèles entre eux et perpendiculaires aux plans moyens P₁ de la première famille 8, c'est-à-dire formant un angle égale à 90° avec la direction circonférentielle XX'.

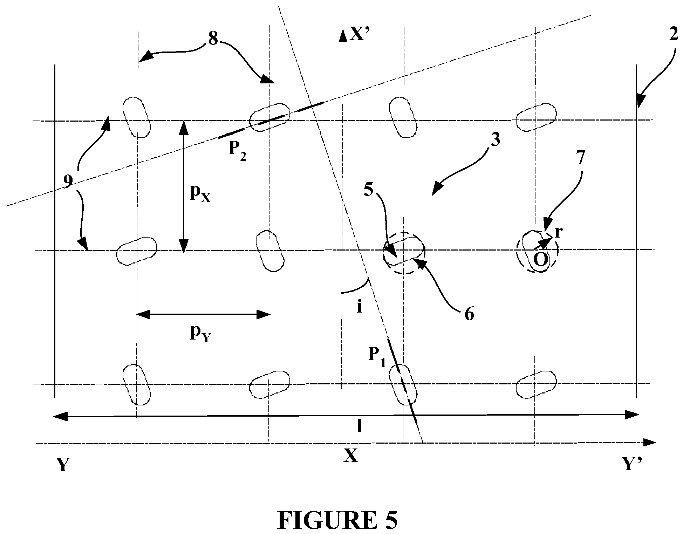

La figure 5 présente la vue de dessus d'une bande de roulement d'un pneumatique d'avion selon une deuxième variante de réalisation de l'invention. Cette deuxième variante de réalisation de l'invention diffère de la première variante de réalisation par l'angle formé par les plans moyens P₁ des cavités 5 de la première famille 8, avec la direction circonférentielle XX'. Dans le cas présent, l'angle i est inférieur à 45°.

Les inventeurs ont réalisé l'invention selon le mode de réalisation présenté sur la figure 4, avec des surfaces débouchantes de cavités de forme oblongue, pour un pneumatique d'avion de dimension 46x17R20, dont l'usage est caractérisé par une pression nominale égale à 15.9 bars, une charge statique nominale égale à 20473 daN et une vitesse de référence maximale de 225 km/h.

Dans le pneumatique étudié, l'armature de sommet comprend 7 couches de travail, comprenant des éléments de renforcement en matériau hybride combinant un polyamide aliphatique, de type aramide, et un polyamide aromatique, de type nylon, lesdits éléments de renforcement formant un angle variable compris entre 0° et 12° avec la direction circonférentielle. L'armature de sommet comprend radialement, à l'extérieur des couches de travail, une couche de protection comprenant des éléments de renforcement métalliques sensiblement circonférentiels. L'aire de contact avec le sol de la surface de roulement, lorsque le pneumatique neuf est soumis à une flèche radiale de 32%, comprend, selon la direction circonférentielle, 4 rangées axiales de 3 cavités, soit 24 cavités réparties selon un pas axial égal à 64 mm et un pas circonférentiel égal à 64 mm. Ces cavités sont réparties selon une première famille de cavités, dont les plans moyens sont orientés selon la direction circonférentielle, et une deuxième famille de cavités, dont les plans moyens sont orientés selon la direction axiale. Chaque cavité a une surface débouchante de forme oblongue, inscrite dans un cercle de rayon égal à 12 mm. Chaque cavité a une largeur de 4 mm, une hauteur radiale de 12 mm et une longueur de 24 mm.

Dans le cas de l'architecture de référence, où la bande de roulement comprend cinq nervures circonférentielles classiques, la masse des morceaux de bande de roulement est comprise entre 0.1 kg et 3.5 kg, alors que, dans l'architecture selon l'invention, la masse des morceaux de bande de roulement est comprise entre 0.1 kg et 0.8 kg.

Pour encore mieux maîtriser les dimensions maximales des morceaux de bande de roulement, l'invention peut être avantageusement combinée avec des architectures de sommet adaptées.

Par exemple, il peut être envisagé de rapprocher au maximum l'armature de sommet, et en particulier la couche de sommet la plus radialement extérieure qui est généralement une couche de protection métallique, de la surface de fond, par exemple à une distance radiale de l'ordre de 2mm. De façon alternative une couche de déchapage, radialement extérieure à l'armature de sommet de référence, peut être positionnée au plus près de la surface de fond. Ceci permet de réduire corrélativement la distance radiale entre la couche de sommet la plus radialement extérieure et le fond de la cavité, donc la distance de fissuration lors de la propagation de la fissuration radialement vers l'extérieur. De plus, l'épaisseur radiale des morceaux des bandes de roulement est diminuée donc leur masse est réduite.

La couche de déchapage peut comprendre avantageusement des éléments de renforcements parallèles entre eux, préférentiellement, mais pas exclusivement, en polyamide aliphatique de type nylon.

L'angle formé, avec la direction circonférentielle, par les éléments de renforcement de la couche de déchapage ou de la couche de sommet, positionnée radialement à l'intérieur et au plus près de la surface de fond, peut être optimisé en relation avec l'angle d'inclinaison des plans moyens des cavités précédemment décrit.

## Revendications

1. Pneumatique (1) pour avion comprenant :
- une bande de roulement (2) destinée à venir en contact avec un sol par l'intermédiaire d'une surface de roulement (3), et s'étendant radialement entre une surface de fond (4) et la surface de roulement (3),
- la bande de roulement (2) comprenant des cavités (5) indépendantes, non reliées les unes aux autres,
- chaque cavité (5) ayant, dans la surface de roulement (3), une surface débouchante (6), inscrite dans un cercle (7), où les centres (O) des cercles (7), circonscrits aux surfaces débouchantes (6) des cavités (5), sont répartis axialement, sur au moins une partie de la largeur axiale (1) de la surface de roulement (3), selon un pas axial (p_{Y}) au moins égal à 0.02 fois et au plus égal à 0.12 fois la longueur circonférentielle de la périphérie du pneumatique (1), où les centres (O) des cercles (7), circonscrits aux surfaces débouchantes (6) des cavités (5), sont répartis circonférentiellement, sur au moins une partie de la périphérie du pneumatique (1), selon un pas circonférentiel (p_{X}) au moins égal à 0.02 fois et au plus égal à 0.12 fois la longueur circonférentielle de la périphérie du pneumatique (1), où les cavités (5), réparties axialement et circonférentiellement respectivement selon les pas axial (p_{Y}) et circonférentiel (p_{X}), constituent un réseau bidimensionnel de cavités constitué de mailles rectangulaires ou carrées, **caractérise en ce que** les surfaces débouchantes (6) des cavités (5) ont une forme oblongue **et en ce que,** chaque cavité (5) ayant un plan moyen (P₁, P₂) orienté perpendiculairement à la surface débouchante (6) et selon la plus grande dimension de la surface débouchante (6), les plans moyens (P₁, P₂) des cavités (5) sont répartis entre une première famille (8) de plans moyens (P₁), parallèles entre eux et formant un angle (i) avec la direction circonférentielle (XX'), et une deuxième famille (9) de plans moyens (P₂), parallèles entre eux et perpendiculaires aux plans moyens (P₁) de la première famille (8).

2. Pneumatique (1) pour avion selon la revendication 1, **caractérisé en ce que** le pas axial (p_{Y}) des centres (O) des cercles (7), circonscrits aux surfaces débouchantes (6) des cavités (5), est au moins égal à 0.06 fois la longueur circonférentielle de la périphérie du pneumatique (1).

3. Pneumatique (1) pour avion selon l'une des revendications 1 ou 2, **caractérisé en ce que** le pas circonférentiel (p_{X}) des centres (O) des cercles (7), circonscrits aux surfaces débouchantes (6) des cavités (5), est au moins égal à 0.06 fois la longueur circonférentielle de la périphérie du pneumatique (1).

4. Pneumatique (1) pour avion selon l'une quelconque des revendications 1 à 3, **caractérisé en ce que** les centres (O) des cercles (7), circonscrits aux surfaces débouchantes (6) des cavités (5), sont répartis axialement, sur toute la largeur axiale (1) de la surface de roulement (3), selon un pas axial (p_{Y}) constant.

5. Pneumatique (1) pour avion selon l'une quelconque des revendications 1 à 4, **caractérisé en ce que** les centres (O) des cercles (7), circonscrits aux surfaces débouchantes (6) des cavités (5), sont répartis circonférentiellement, sur toute la périphérie du pneumatique (1), selon un pas circonférentiel (p_{X}) constant.

6. Pneumatique (1) pour avion selon l'une quelconque des revendications 1 à 5, **caractérisé en ce que** le pas axial (p_{Y}) et le pas circonférentiel (p_{X}) des centres (O) des cercles (7), circonscrits aux surfaces débouchantes (6) des cavités (5), sont égaux.

7. Pneumatique (1) pour avion selon l'une quelconque des revendications 1 à 6, **caractérisé en ce que** le rayon (r) d'un cercle (7), circonscrit à la surface débouchante (6) d'une cavité (5), est au moins égal à 1.5mm.

8. Pneumatique (1) pour avion selon l'une quelconque des revendications 1 à 7, **caractérisé en ce que** le rayon (r) d'un cercle (7), circonscrit à la surface débouchante (6) d'une cavité (5), est au plus égal à 0.25 fois le pas axial (p_{Y}) et au plus égal à 0.25 fois le pas circonférentiel (p_{X}).

9. Pneumatique (1) pour avion selon l'une quelconque des revendications 1 à 8, **caractérisé en ce que** l'angle (i) de la première famille (8) de plans moyens (P₁) est égal à 0°.

10. Pneumatique (1) pour avion selon l'une quelconque des revendications 1 à 8, **caractérisé en ce que** l'angle (i) de la première famille (8) de plans moyens (P₁) est égal à 45°.

11. Pneumatique (1) pour avion selon l'une quelconque des revendications 1 à 10, **caractérisé en ce que** la hauteur radiale (a) d'une cavité (5) est au moins égale à la moitié de la hauteur radiale (h) de la bande de roulement (2) et au plus égale la hauteur radiale (h) de bande de roulement (2).

## Patentansprüche

1. Flugzeugreifen (1), umfassend:
- einen Laufstreifen (2), der dazu bestimmt ist, mittels einer Lauffläche (3) mit einem Boden in Kontakt zu treten, und der sich radial zwischen einer Bodenfläche (4) und der Lauffläche (3) erstreckt,
- wobei der Laufstreifen (2) unabhängige Hohlräume (5) umfasst, die nicht miteinander verbunden sind,
- wobei jeder Hohlraum (5) in der Lauffläche (3) eine Mündungsfläche (6) aufweist, die in einem Kreis (7) liegt, wo die Mittelpunkte (O) der Kreise (7), die auf die Mündungsflächen (6) der Hohlräume (5) begrenzt sind, auf mindestens einem Bereich der axialen Breite (1) der Lauffläche (3) entsprechend einem axialen Abstand (p_{Y}), der mindestens gleich dem 0,02-fachen und höchstens gleich dem 0,12-fachen der Umfangslänge des Umfangs des Reifens (1) ist, axial verteilt sind, wo die Mittelpunkte (O) der Kreise (7), die auf die Mündungsflächen (6) der Hohlräume (5) begrenzt sind, auf mindestens einem Bereich des Umfangs des Reifens (1) entsprechend einem Abstand (p_{X}) in Umfangsrichtung, der mindestens gleich dem 0,02-fachen und höchstens gleich dem 0,12-fachen der Umfangslänge des Umfangs des Reifens (1) ist, in Umfangsrichtung verteilt sind, wo die Hohlräume (5), die axial und in Umfangsrichtung entsprechend dem axialen Abstand (p_{Y}) bzw. dem Abstand in Umfangsrichtung (p_{X}) verteilt sind, ein zweidimensionales Netz aus Hohlräumen bilden, das aus rechteckigen oder quadratischen Maschen gebildet ist, **dadurch gekennzeichnet, dass** die Mündungsflächen (6) der Hohlräume (5) eine längliche Form aufweisen, und dadurch, dass, jeder Hohlraum (5) eine mittlere Ebene (P₁ P₂) aufweisend, die senkrecht zur Mündungsfläche (6) und entsprechend der größten Abmessung der Mündungsfläche (6) orientiert ist, die mittleren Ebenen (P₁, P₂) der Hohlräume (5) zwischen einer erste Familie (8) von mittleren Ebenen (P₁), die untereinander parallel sind und einen Winkel (i) mit der Umfangsrichtung (XX') bilden, und einer zweiten Familie (9) von mittleren Ebenen (P₂), die untereinander parallel sind und senkrecht zu den mittleren Ebenen (P₁) der ersten Familie (8) verlaufen, verteilt sind.

2. Flugzeugreifen (1) nach Anspruch 1, **dadurch gekennzeichnet, dass** der Axialabstand (p_{Y}) der Mittelpunkte (O) der Kreise (7), die auf die Mündungsflächen (6) der Hohlräume (5) begrenzt sind, mindestens gleich dem 0,06-fachen der Länge in Umfangsrichtung des Umfangs des Reifens (1) ist.

3. Flugzeugreifen (1) nach einem der Ansprüche 1 oder 2, **dadurch gekennzeichnet, dass** der Umfangsabstand (p_{X}) der Mittelpunkte (O) der Kreise (7), die auf die Mündungsflächen (6) der Hohlräume (5) begrenzt sind, mindestens gleich dem 0,06-fachen der Länge in Umfangsrichtung des Umfangs des Reifens (1) ist.

4. Flugzeugreifen (1) nach einem der Ansprüche 1 bis 3, **dadurch gekennzeichnet, dass** die Mittelpunkte (O) der Kreise (7), die auf die Mündungsflächen (6) der Hohlräume (5) begrenzt sind, über die gesamte axiale Länge (1) der Lauffläche (3) entsprechend einem konstanten Axialabstand (p_{Y}) axial verteilt sind.

5. Flugzeugreifen (1) nach einem der Ansprüche 1 bis 4, **dadurch gekennzeichnet, dass** die Mittelpunkte (O) der Kreise (7), die auf die Mündungsflächen (6) der Hohlräume (5) begrenzt sind, über den gesamten Umfang des Reifens (1) entsprechend einem konstanten Umfangsabstand (p_{X}) in Umfangsrichtung verteilt sind.

6. Flugzeugreifen (1) nach einem der Ansprüche 1 bis 5, **dadurch gekennzeichnet, dass** der Axialabstand (p_{Y}) und der Umfangsabstand (p_{X}) der Mittelpunkte (O) der Kreise (7), die auf die Mündungsflächen (6) der Hohlräume (5) begrenzt sind, gleich sind.

7. Flugzeugreifen (1) nach einem der Ansprüche 1 bis 6, **dadurch gekennzeichnet, dass** der Radius (r) eines Kreises (7), der auf die Mündungsfläche (6) eines Hohlraums (5) begrenzt ist, mindestens gleich 1,5 mm ist.

8. Flugzeugreifen (1) nach einem der Ansprüche 1 bis 7, **dadurch gekennzeichnet, dass** der Radius (r) eines Kreises (7), der auf die Mündungsfläche (6) eines Hohlraums (5) begrenzt ist, höchstens gleich dem 0,25-fachen des Axialabstands (p_{Y}) und höchstens gleich dem 0,25-fachen des Umfangsabstands (p_{X}) ist.

9. Flugzeugreifen (1) nach einem der Ansprüche 1 bis 8, **dadurch gekennzeichnet, dass** der Winkel (i) der ersten Familie (8) von mittleren Ebenen (P₁) gleich 0° ist.

10. Flugzeugreifen (1) nach einem der Ansprüche 1 bis 8, **dadurch gekennzeichnet, dass** der Winkel (i) der ersten Familie (8) von mittleren Ebenen (P₁) gleich 45° ist.

11. Flugzeugreifen (1) nach einem der Ansprüche 1 bis 10, **dadurch gekennzeichnet, dass** die radiale Höhe (a) eines Hohlraums (5) mindestens gleich der Hälfte der radialen Höhe (h) des Laufstreifens (2) und höchstens gleich der radialen Höhe (h) des Laufstreifens (2) ist.

## Claims

1. Tyre (1) for an aeroplane, comprising
- a tread (2) intended to come into contact with the ground via a tread surface (3), and extending radially between a bottom surface (4) and the tread surface (3),
- the tread (2) comprising independent cavities (5) that are not connected to one another,
- each cavity (5) having, in the tread surface (3), an opening surface (6) inscribed inside a circle (7), where the centres (O) of the circles (7), circumscribed at the opening surfaces (6) of the cavities (5), are distributed axially, over at least part of the axial width (1) of the tread surface (3), with an axial spacing (p_{Y}) at least equal to 0.02 times and at most equal to 0.12 times the circumferential length of the periphery of the tyre (1), where the centres (O) of the circles (7), circumscribed at the opening surfaces (6) of the cavities (5), are distributed circumferentially, over at least part of the periphery of the tyre (1), with a circumferential spacing (p_{X}) at least equal to 0.02 times and at most equal to 0.12 times the circumferential length of the periphery of the tyre (1) where the cavities (5), distributed respectively axially and circumferentially with axial pitch (p_{Y}) and circumferential pitch (p_{X}), constitute a two-dimensional network of cavities made up of rectangular or square mesh cells, **characterized in that** the opening surfaces (6) of the cavities (5) have an oblong shape, and **in that**, each cavity (5) having a mean plane (P₁, P₂) oriented perpendicular to the opening surface (6) and along the longest dimension of the opening surface (6), the mean planes (P₁, P₂) of the cavities (5) are distributed between a first family (8) of mean planes (P₁) that are mutually parallel and make an angle (i) with the circumferential direction (XX'), and a second family (9) of mean planes (P₂) that are mutually parallel and perpendicular to the mean planes (P₁) of the first family (8).

2. Tyre (1) for an aeroplane according to Claim 1, **characterized in that** the axial spacing (p_{Y}) of the centres (O) of the circles (7), circumscribed at the opening surfaces (6) of the cavities (5), is at least equal to 0.06 times the circumferential length of the periphery of the tyre (1).

3. Tyre (1) for an aeroplane according to Claims 1 or 2, **characterized in that** the circumferential spacing (p_{X}) of the centres (O) of the circles (7), circumscribed at the opening surfaces (6) of the cavities (5), is at least equal to 0.06 times the circumferential length of the periphery of the tyre (1) .

4. Tyre (1) for an aeroplane according to any one of Claims 1 to 3, **characterized in that** the centres (O) of the circles (7), circumscribed at the opening surfaces (6) of the cavities (5), are distributed axially, over the entire axial width (1) of the tread surface (3), with an axial spacing (p_{Y}) that is constant.

5. Tyre (1) for an aeroplane according to any one of Claims 1 to 4, **characterized in that** the centres (O) of the circles (7), circumscribed at the opening surfaces (6) of the cavities (5), are distributed circumferentially, over the entire periphery of the tyre (1), with a circumferential spacing (p_{X}) that is constant.

6. Tyre (1) for an aeroplane according to any one of Claims 1 to 5, **characterized in that** the axial spacing (p_{Y}) and the circumferential spacing (p_{X}) of the centres (O) of the circles (7), circumscribed at the opening surfaces (6) of the cavities (5), are equal.

7. Tyre (1) for an aeroplane according to any one of Claims 1 to 6, **characterized in that** the radius (r) of a circle (7), circumscribed at the opening surface (6) of a cavity (5), is at least equal to 1.5 mm.

8. Tyre (1) for an aeroplane according to any one of Claims 1 to 7, **characterized in that** the radius (r) of a circle (7), circumscribed at the opening surface (6) of a cavity (5), is at most equal to 0.25 times the axial spacing (p_{Y}) and at most equal to 0.25 times the circumferential spacing (p_{X}).

9. Tyre (1) for an aeroplane according to any one of Claims 1 to 8, **characterized in that** the angle (i) of the first family (8) of mean planes (P₁) is equal to 0°.

10. Tyre (1) for an aeroplane according to any one of Claims 1 to 8, **characterized in that** the angle (i) of the first family (8) of mean planes (P₁) is equal to 45°.

11. Tyre (1) for an aeroplane according to any one of Claims 1 to 10, **characterized in that** the radial height (a) of a cavity (5) is at least equal to half the radial height (h) of the tread (2) and at most equal to the radial height (h) of the tread (2).
